# FASCICULE DE BREVET EUROPEEN

(11) **EP 1 757 130 B1**
(45) Date de publication et mention de la délivrance du brevet: **22.06.2011**
(21) Numéro de dépôt: 05747174.0
(22) Date de dépôt: 26.04.2005
(51) Int. Cl.: H04W 88/02

(54) **DEVERROUILLAGE SECURISE D'UN TERMINAL MOBILE**
VERFAHREN ZUM SICHEREN ENTRIEGELN EINES MOBILEN ENDGERÄTS
METHOD OF SECURELY UNLOCKING A MOBILE TERMINAL

(30) Priorité: 27.05.2004 FR 0405734
(43) Date de publication de la demande: 28.02.2007
(73) Titulaire: Gemalto SA, 92190 Meudon (FR)
(72) Inventeur: CAMBOIS, Etienne, F-13780 CUGES LES PINS (FR); BENOIT, Olivier, 13470 Carnoux en Provence (FR)
(86) Numéro de dépôt international: PCT/EP2005/051873
(87) Numéro de publication internationale: WO 2005/117476

(56) Documents cités:
- FR-A- 2 814 823
- US-A- 6 124 799
- US-A1- 2004 092 248

## Description

La présente invention concerne le déverrouillage d'un terminal mobile dans un réseau de radiocommunications cellulaire numérique.

Plus particulièrement, l'invention est dirigée vers une sécurisation du déverrouillage d'un terminal mobile qu'un opérateur a vendu à un prix très bas à un usager en compensation d'un abonnement au réseau de radiocommunications de l'opérateur. Pendant une durée prédéterminée, par exemple de six mois, succédant à la souscription de l'abonnement, le terminal est verrouillé par l'opérateur sur son propre réseau de radiocommunications et ne peut requérir de communication qu'à travers le réseau de l'opérateur.

Actuellement, le verrouillage du terminal mobile par l'opérateur est accompli lors d'une phase finale de la fabrication du terminal. L'opérateur commande une quantité de terminaux mobiles au fabricant de terminaux en lui transmettant un code d'identification d'opérateur. Ce code est standardisé et chaque opérateur dispose d'un code d'identification unique. En phase finale de fabrication, le fabricant verrouille les terminaux mobiles destinés à l'opérateur en y implémentant un algorithme de déverrouillage secret auquel sont appliqués un numéro de série de terminal et le code d'opérateur pour produire un code de déverrouillage qui est mémorisé et qui est associé à un verrou imposant des communications que par le biais du réseau de l'opérateur. Chaque terminal mobile dispose aussi d'une fonction de déverrouillage manuelle à laquelle le code de déverrouillage sera appliqué par l'usager du terminal afin de débloquer le verrou.

Après l'échéance de la durée prédéterminée, l'usager du terminal mobile doit appeler un centre de clientèle de l'opérateur pour demander le code de déverrouillage. L'opérateur disposant de l'algorithme de déverrouillage secret et connaissant le numéro de série du terminal de l'usager en correspondance avec son numéro téléphonique d'abonnement et, bien entendu, son propre code d'opérateur est capable de recalculer le code de déverrouillage. Le code de déverrouillage est ensuite transmis à l'usager qui le saisit sur son terminal mobile afin de l'appliquer à l'algorithme secret implémenté dans le terminal mobile. Le terminal mobile compare alors le code de déverrouillage saisi avec celui initialement mémorisé au cours de sa phase finale de fabrication. Si les codes de déverrouillage comparés sont identiques, le terminal mobile est déverrouillé et l'usager peut en disposer par exemple pour souscrire un abonnement auprès d'un autre opérateur de réseau de radiocommunications.

Il s'avère que l'algorithme secret est bien souvent diffusé directement ou indirectement, par internet par exemple, et ainsi mis à disposition de certains usagers malveillants. Ainsi à l'issue de la souscription de l'abonnement par un usager malveillant et sans attendre l'échéance de la durée prédéterminée, celui-ci peut déverrouiller son terminal mobile et décider de souscrire un abonnement chez un autre opérateur et ainsi utiliser le terminal mobile quasiment gratuitement, sans que le premier opérateur qui lui a vendu le terminal mobile ait un retour sur l'investissement dans celui-ci, précisément après la durée prédéterminée. Ce déverrouillage répété dans de nombreux terminaux mobiles que le premier opérateur a vendus constitue pour celui-ci un manque à gagner considérable.

Un autre exemple peut être trouvée dans FR 2814823 (SAGEM SA) 05-04-2002.

L'objectif de l'invention est de permettre un déverrouillage du terminal mobile seulement à l'issue de la durée prédéterminée et ainsi d'assurer un revenu suffisant au premier opérateur pendant la durée prédéterminée grâce une utilisation de son réseau réellement imposée au terminal mobile d'une manière sécurisée, sans que l'usager ait connaissance du code de déverrouillage. De plus, l'administration de certains pays impose aux opérateurs un déverrouillage systématique à l'issue de cette durée.

Pour atteindre cet objectif, un procédé pour déverrouiller un terminal mobile qui avant son utilisation est affecté à un réseau de radiocommunications géré par un opérateur et a mémorisé une clé secrète résultant de l'application d'une identité du terminal mobile et d'un code de l'opérateur à un algorithme de sécurité, le procédé comprenant après une durée prédéterminée d'utilisation une introduction d'une clé secrète dans le terminal mobile pour y être comparée à la clé secrète mémorisée, est caractérisé en ce qu'il comprend les étapes suivantes:
avant l'utilisation, mémoriser l'identité du terminal mobile et implémenter l'algorithme de sécurité inconnu de l'opérateur dans un module de sécurité , et introduire le module de sécurité dans une entité de service gérée par l'opérateur et communiquant avec le terminal mobile à travers au moins le réseau de radiocommunications,
après la durée prédéterminée d'utilisation, dans le module de sécurité déterminer une clé secrète résultant de l'application de l'identité de terminal transmise par le terminal mobile et du code de l'opérateur à l'algorithme de sécurité à la suite d'une requête d'actualisation transmise par l'entité de service, et transmettre la clé secrète déterminée chiffrée au terminal mobile à travers le réseau de radiocommunications, et déchiffrer dans le terminal mobile la clé secrète chiffrée en tant que clé secrète introduite pour la comparer à la clé secrète mémorisée pour déverrouiller le terminal mobile lorsque les clés secrètes comparées sont identiques.

Le déverrouillage du terminal mobile qui est activé dans celui-ci lorsque les clés secrètes comparées sont identiques, est commandé à travers le réseau de radiocommunications du premier opérateur, c'est-à-dire à travers l'interface radio OTA (Over The Air), sans nécessiter une connaissance de la clé secrète déterminée par l'usager et une saisie de celle-ci en tant que code de déverrouillage.

La sécurisation du déverrouillage du terminal mobile est améliorée selon l'invention grâce à l'implémentation de l'algorithme de sécurité dans le module de sécurité par le fabricant de terminaux qui conserve ainsi secret l'algorithme de sécurité vis-à-vis de l'opérateur.

Pour activer un déverrouillage du terminal mobile dépendant du paramètre lorsque les clés secrètes comparées sont identiques, des données personnelles incluant la clé secrète déterminée et un paramètre peuvent être transmises chiffrées depuis l'entité de service au terminal mobile et déchiffrées dans le terminal mobile.

Selon une réalisation plus complète, le procédé de déverrouillage de terminal mobile comprend les étapes suivantes :
dans le module de sécurité, appliquer des données personnelles et un premier nombre aléatoire transmis avec l'identité de terminal par le terminal mobile, à un algorithme ayant pour clé la clé secrète déterminée pour produire un premier code d'authentification afin de transmettre les données personnelles chiffrées et le code d'authentification depuis l'entité de service au terminal mobile, et
dans le terminal mobile, produire un premier code d'authentification, comparer les premiers codes d'authentification produit et transmis à la place de la comparaison des clés secrètes, et déchiffrer et interpréter les données personnelles chiffrées lorsque les codes d'authentification comparés sont identiques.

Les données personnelles peuvent inclure au moins une partie de l'identité du terminal mobile et un paramètre afin d'activer un déverrouillage du terminal mobile dépendant du paramètre lorsque les codes d'authentification comparés sont identiques

Dans cette réalisation plus complète, la clé secrète déterminée n'est pas transmise en clair par le module de sécurité au terminal mobile. L'actualisation des données personnelles est soumises à la vérification du premier code d'authentification dans le terminal mobile. Il n'est donc pas possible de déverrouiller le terminal ou d'accomplir d'autres actions dans le terminal sans avoir une connaissance de la clé secrète et de l'algorithme de sécurité. Le premier nombre aléatoire remédie à des attaques sur les données personnelles pouvant commander le déverrouillage.

En outre, la sécurisation est encore améliorée grâce à la clé secrète et l'algorithme de sécurité qui sont la propriété du fabricant du terminal mobile et qui sont inconnus de l'opérateur, en opposition avec les données personnelles et l'algorithme pour code d'authentification qui sont la propriété de l'opérateur et qui sont inconnus du fabricant de terminal mobile.

La clé secrète empêche toute personne mal intentionnée qui ne possède pas l'algorithme de sécurité de pouvoir déverrouiller le terminal mobile. La clé secrète en combinaison avec le premier nombre aléatoire transmis par le terminal mobile, est transformée en un code d'authentification ce qui interdit tout tiers autre que le premier opérateur qui a vendu le terminal mobile, de déverrouiller celui-ci et ainsi d'actualiser les données personnelles dans le terminal mobile.

En variante, l'usager peut lui-même demander le déverrouillage du terminal mobile. Dans ce cas, après la durée prédéterminée d'utilisation, un message de demande de déverrouillage est transmis depuis le terminal mobile vers le module de sécurité afin que le module de sécurité requiert la transmission de l'identité au terminal.

De préférence le déverrouillage ou tout autre action commandé dans le terminal mobile par le module de sécurité est confirmé à ce dernier. Le procédé comprend alors les étapes suivantes:
générer un deuxième nombre aléatoire dans le module de sécurité et le transmettre avec au moins la clé secrète ou un premier code d'authentification dépendant de la clé secrète au terminal mobile,
lorsque les clés secrètes ou des premiers codes d'authentification comparés sont identiques dans le terminal mobile, produire un deuxième code d'authentification résultant de l'application des données personnelles et du deuxième nombre aléatoire à un algorithme ayant pour clé la clé secrète, et transmettre l'identité de terminal et le deuxième code d'authentification depuis le terminal mobile à l'entité de service, et
dans le module de sécurité, produire un deuxième code d'authentification et le comparer au deuxième code d'authentification transmis.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est un bloc-diagramme schématique d'une liaison de télécommunications entre un serveur d'opérateur à module sécurisé et un terminal mobile pour la mise en oeuvre du procédé de déverrouillage ;
- la figure 2 est un algorithme des étapes principales du procédé de déverrouillage selon une première réalisation préférée de l'invention ; et
- la figure 3 est un algorithme des étapes principales du procédé de déverrouillage selon une deuxième réalisation plus simple de l'invention.

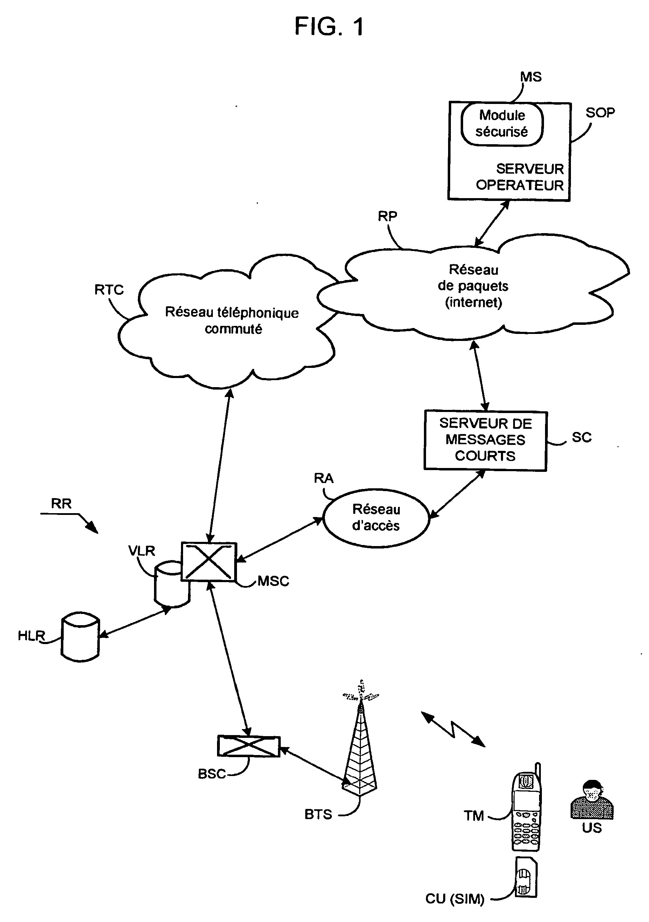

En référence à la figure 1, un terminal radio mobile TM équipé d'une carte à puce d'usager amovible CU du type UICC (Universal Integrated Circuit(s) Card), dite carte SIM (Subscriber Identity Module) dans le cadre du GSM, est fourni à un usager US par un premier opérateur qui gère un réseau de radiocommunications cellulaire numérique RR. Par exemple le réseau de radiocommunications RR est de type GSM. Dans la figure 1, on a seulement représenté les éléments principaux de la zone de localisation du réseau RR où le terminal mobile TM se trouve à un instant donné. La zone de localisation comprend un commutateur du service mobile MSC qui est relié d'une part à travers un contrôleur de station de base BSC à une station de base BTS connectée par une liaison radio au terminal mobile TM, d'autre part à un commutateur téléphonique à autonomie d'acheminement d'un réseau téléphonique commuté RTC.

Comme il est connu, le réseau RR comprend également un enregistreur de localisation nominal HLR relié à plusieurs enregistreurs de localisation de visiteurs VLR, dont celui relié au commutateur MSC de la zone de localisation considérée. L'enregistreur HLR est analogue à une base de données contenant pour chaque usager notamment une identité internationale IMSI (International Mobile Subscriber Identity) attachée à l'usager et ainsi à la carte d'usager CU, le profil d'abonnement de l'usager et le numéro de l'enregistreur VLR auquel le terminal mobile TM est rattaché momentanément. L'enregistreur VLR joue le rôle de relais de l'enregistreur HLR dans la zone de localisation et contient les caractéristiques des usagers dont les terminaux mobiles sont situés dans la zone de localisation.

Un serveur SOP, en tant qu'entité de service selon l'invention, est géré par l'opérateur du réseau RR.

Selon la réalisation illustrée à la figure 1, le serveur d'opérateur SOP échange des messages de données avec le terminal mobile TM à travers un serveur de messages courts (Short Message Service Centre) SC. Le serveur SC comporte une passerelle d'accès pour communiquer avec le serveur d'opérateur SOP à travers un réseau de paquets RP à haut débit, en particulier l'internet, ou en variante un réseau intranet, et une autre passerelle d'accès pour communiquer avec au moins le commutateur du service mobile MSC cité précédemment, à travers bien souvent un réseau d'accès RA tel qu'un réseau de paquets de type X.25 ou un réseau RNIS ou ATM. Les paquets transmis par le serveur SOP sont formatés dans le serveur SC en messages courts transmis vers le terminal mobile TM ; inversement, des messages courts transmis par le terminal mobile TM sont acheminés par le serveur SC sous forme de paquets destinés au serveur d'opérateur SOP.

En variante, le serveur SC est relié directement ou est incorporé au commutateur MSC.

Selon l'invention, le serveur d'opérateur SOP accueille un module de sécurité amovible MS qui est de préférence une carte à puce. Le module de sécurité MS contient en mémoire une identité IMEI (International Module Equipment Identity) du terminal mobile TM et des données personnelles DP propres à l'ensemble constitué par le terminal mobile TM et la carte d'usager CU. L'identité IMEI inclut en particulier un code de fabricant. Les données personnelles DP sont modifiables par l'opérateur et peuvent comprendre notamment au moins une partie de l'identité IMEI du terminal, un code COP de l'opérateur du réseau RR devant commercialiser le terminal mobile avec la carte d'usager, un code du pays où le réseau RR de l'opérateur est implanté, un paramètre de déverrouillage DEV afin d'activer un déverrouillage du terminal mobile, ou pour d'autres circonstances un paramètre de verrouillage, et/ou divers autres paramètres pour commander des actions dans le terminal. Le module de sécurité MS contient également des algorithmes AS, AA et CH qui seront définis plus loin.

Comme on le verra dans la description du procédé de déverrouillage de terminal mobile selon l'invention, le serveur d'opérateur SOP sert essentiellement à échanger des messages avec le terminal mobile TM, tandis que le module de sécurité MS sert essentiellement à traiter des données contenues dans des messages échangés.

De même, la carte SIM assure de manière sécurisée les échanges de messages avec le serveur d'opérateur SOP distant à travers le terminal mobile qui est transparent à ces échanges, et ainsi introduit des paramètres de commande du terminal dans des messages à transmettre et extrait des paramètres de messages reçus pour le terminal.

Selon une première variante, le serveur de messages courts SC et le réseau d'accès RA sont remplacés par un réseau d'accès du type réseaux à commutation par paquets avec gestion de la mobilité et accès par voie radio GPRS (General Paquet Radio Service). Le réseau de paquets RP est alors relié à un noeud-passerelle GGSN (Gateway GPRS Support Node) au réseau GPRS, et le contrôleur de station de base BSC est relié à travers un noeud de services SGSN (Serving GPRS Support Node). L'intérêt de cette variante est de transmettre des messages sous forme de paquets avec des débits nettement plus élevés.

Selon une deuxième variante, le serveur d'opérateur SOP est relié directement ou est incorporé à l'enregistreur de localisation nominal HLR ce qui permet au serveur SOP de bénéficier directement des données mémorisées dans l'enregistreur HLR.

Selon encore une autre variante, le réseau de radiocommunications cellulaire RR est de la troisième génération, c'est-à-dire est un réseau UMTS. Dans ce cas, la carte d'usager CU est une carte USIM et le contrôleur BSC avec la station de base BTS sont regroupés dans le réseau d'accès UTRAN (UMTS Terrestrial Radio Access Network) du réseau UMTS.

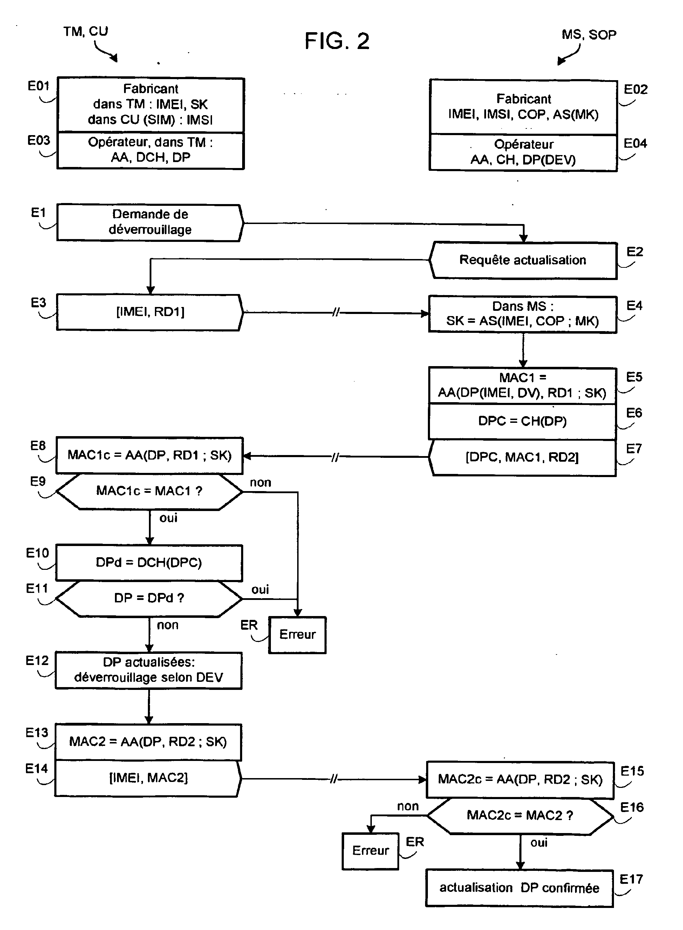

Selon une **première réalisation montrée à la** **figure 2****,** avant la vente et l'utilisation du terminal mobile TM avec la carte à puce CU, le procédé de déverrouillage selon l'invention comprend quatre étapes initiales E01 à E04 qui sont exécutées chez le fabricant de terminal mobile et l'opérateur du réseau RR qui a commandé un lot de terminaux mobiles munis chacun d'une carte à puce auprès du fabricant.

A l'étape E01, le fabricant saisit des données confidentielles propres à la carte CU et au terminal mobile TM contenant la carte CU, telles que les identités IMEI et IMSI incluant respectivement un code de fabricant et un code d'opérateur COP propre à l'opérateur du réseau RR. Le fabricant enregistre également dans le terminal mobile TM une clé secrète SK qui résulte de l'application de l'identité de terminal IMEI et du code COP à un algorithme de sécurité AS avec une clé mère MK. L'algorithme de sécurité AS avec la clé mère MK est la propriété du fabricant de terminal mobile et est méconnu de l'opérateur de radiocommunications.

A l'étape E02, pour chaque terminal mobile TM avec une carte d'usager CU du lot commandé par l'opérateur au fabricant, le fabricant enregistre dans le module de sécurité MS en association l'identité de terminal IMEI, le code d'opérateur COP, l'identité d'usager IMSI et l'algorithme de sécurité AS avec la clé mère MK. L'algorithme de sécurité AS est par exemple du type AES (Advanced Encrytion Standard).

Puis le fabricant livre le lot de terminaux mobiles qui ont été chargés des divers paramètres précités au cours de l'étape E01 avec le module de sécurité amovible MS à insérer dans le serveur d'opérateur SOP, à l'opérateur du réseau de radiocommunications RR.

A l'étape E03, l'opérateur installe dans chaque terminal du lot livré un algorithme d'authentification AA ayant pour clé la clé secrète SK, un algorithme de déchiffrement DCH et au moins une application de déverrouillage. L'algorithme d'authentification AA est la propriété de l'opérateur et méconnu du fabricant, comme à l'inverse, l'algorithme AS a été conçu de manière secrète par le fabricant et est donc méconnu de l'opérateur. L'algorithme de déchiffrement DCH sert à déchiffrer des données chiffrées par un algorithme de chiffrement CH et transmises par le serveur SOP. L'application de déverrouillage peut dépendre de données personnelles DP mémorisées dans le terminal à l'étape E03 et modifiables par l'opérateur. L'application de déverrouillage impose au futur usager US du terminal TM de ne communiquer qu'à travers le réseau de radiocommunications RR du premier opérateur qui lui a vendu le terminal, pendant une durée de verrouillage prédéterminée, typiquement de six mois.

A l'étape E04, l'opérateur installe également l'algorithme d'authentification AA ayant pour clé la clé secrète SK et l'algorithme de déchiffrement DCH et enregistre de préférence les données personnelles DP avec le paramètre de déverrouillage DEV dans le module de sécurité MS, ou en variante dans le serveur SOP.

L'opérateur commercialise ensuite le lot de terminaux mobiles et, en particulier vend un terminal mobile TM avec une carte d'usager CU à un usager US. L'usager US utilise le terminal mobile TM pendant la durée de verrouillage prédéterminée en communiquant à travers le réseau de radiocommunications RR de l'opérateur.

A l'expiration de la durée de verrouillage prédéterminée, l'usager US peut souhaiter déverrouiller son terminal mobile TM de manière à l'utiliser à travers le réseau de radiocommunications d'un autre opérateur. Pour déverrouiller le terminal mobile, des étapes E1 à E17 montrées à la figure 2 sont exécutées selon la première réalisation du procédé de déverrouillage selon l'invention.

A l'étape E1, l'usager US sélectionne le déverrouillage du terminal mobile TM dans un menu affiché dans celui-ci. Un message de demande de déverrouillage est alors transmis par le terminal mobile TM au serveur d'opérateur SOP et est, selon la réalisation montrée à la figure 1, sous forme d'un message court qui est ensuite transformé par le serveur de messages courts SC en un paquet transmis à travers le réseau RP. Le serveur SOP envoie ensuite une requête d'actualisation au terminal mobile TM, à travers les réseaux RP, RA et RR selon la réalisation montrée à la figure 1, à l'étape E2. En réponse à la requête d'actualisation, le terminal mobile TM transmet un message incluant l'identité de terminal IMEI et un premier nombre aléatoire RD1 au module de sécurité MS dans le serveur SOP, à l'étape E3. Le premier nombre aléatoire RD1 est produit par un générateur pseudo-aléatoire inclus dans ou relié au microcontrôleur du terminal TM.

En variante, l'étape E1 est supprimée et le serveur d'opérateur SOP décide lui-même après l'expiration de la durée de verrouillage prédéterminée d'envoyer la requête d'actualisation au terminal mobile TM. Par exemple, la requête d'actualisation est envoyée par le serveur SOP en réponse à une requête d'actualisation de localisation du terminal mobile, ou à la suite d'une requête d'authentification, ou bien après une mise sous tension du terminal mobile lors de la procédure de rattachement de celui-ci à sa zone de localisation dans le réseau de radiocommunications RR.

A la suite de la réception de l'identité IMEI et du nombre aléatoire RD1, le module de sécurité MS détermine divers paramètres aux étapes suivantes E4 à E6.

A l'étape E4, l'identité de terminal mobile reçue IMEI et le code d'opérateur COP sont appliqués avec la clé mère MK à l'algorithme de sécurité AS pour produire la clé secrète fille SK propre au terminal mobile.

A l'étape suivante E5, le module MS détermine un premier code d'authentification MAC1 déduit des données personnelles DP et du nombre aléatoire reçu RD1 appliqués à l'algorithme d'authentification AA ayant pour clé la clé secrète SK.

Ainsi la clé secrète SK propre au fabricant et les données personnelles DP incluant l'identité de terminal IMEI et propres à l'opérateur de radiocommunications contribuent concomitamment à l'authentification et à la sécurisation des données personnelles DP sans que l'opérateur ait connaissance de la clé secrète SK et le fabricant ait connaissance des données personnelles DP.

Ensuite les données personnelles DP sont chiffrées par l'algorithme de chiffrement CH en des données personnelles chiffrées DPC, à l'étape E6. Le serveur SOP établit un message incluant les données personnelles chiffrées DPC, le code d'authentification MAC1 et un deuxième nombre aléatoire RD2 à l'étape E7. Ce message est transmis au terminal mobile TM à travers les réseaux RP, RA et RR. Le nombre aléatoire RD2 peut être généré par un générateur pseudo-aléatoire inclus dans le serveur SOP ou éventuellement dans le module de sécurité MS.

En réponse au message transmis par le serveur SOP à l'étape E7, le terminal mobile TM calcule un code d'authentification MAC1c à l'étape E8. Le code MAC1c résulte de l'application des données personnelles DP initialement mémorisées à l'étape E03 et du nombre aléatoire RD1 généré et mémorisé à l'étape E3 à l'algorithme d'authentification AA avec la clé secrète SK initialement mémorisée dans le terminal mobile à l'étape E01. A l'étape suivante E9, le terminal mobile TM compare le code d'authentification calculé MAC1c au code d'authentification MAC1 transmis par le serveur SOP.

Si les deux codes d'authentification sont égaux, le terminal mobile déchiffre les données personnelles chiffrées DPC transmises par le serveur SOP en les appliquant à l'algorithme de déchiffrement DCH et produit des données personnelles déchiffrées DPd, à l'étape E10. Le terminal mobile TM compare les données personnelles initialement mémorisées à l'étape E03 aux données personnelles déchiffrées DPd, à l'étape E11. Si l'identité de terminal IMEI ou une partie de celle-ci est reconnue dans les données personnelles et si les données personnelles comparées diffèrent typiquement par la présence du paramètre de déverrouillage DEV dans les données personnelles déchiffrée DPd, le terminal mobile TM applique le paramètre de déverrouillage DEV à l'application de déverrouillage qui actualise les données personnelles à l'étape E12 afin que le terminal mobile TM puisse être utilisé pour communiquer avec tout opérateur autre que le premier opérateur si l'usager le souhaite.

En revanche, si les deux codes d'authentification MAC1c et MAC1 comparés sont différents à l'étape E9, et/ou les données personnelles DP et DPd comparées sont identiques à l'étape E11, les données personnelles DP ne sont pas modifiées dans le terminal mobile TM qui produit un message d'erreur, comme indiqué à une étape ER. Le message d'erreur est transmis au serveur d'opérateur SOP qui l'interprète comme un dysfonctionnement du terminal TM et/ou de la carte d'usager CU et le terminal TM n'est pas déverrouillé. Le message d'erreur peut être également signalé à l'usager par un affichage adéquat à l'écran du terminal mobile afin d'inviter l'usager US à aller dans un point de vente de l'opérateur.

En variante, les étapes E10 et E11 sont supprimées et le terminal TM interprète au moins une partie des données personnelles si elles sont transmises à l'étape E7 afin d'exécuter l'étape E12.

De préférence, le procédé de déverrouillage comprend des étapes E13 à E17 afin d'acquitter l'actualisation des données personnelles DP après l'étape E12 et en particulier le déverrouillage du terminal auprès du serveur d'opérateur SOP.

A l'étape E13, le terminal mobile TM détermine un deuxième code d'authentification MAC2 résultant de l'application des données personnelles DP actualisées et du nombre aléatoire RD2 à l'algorithme d'authentification AA pourvu de la clé secrète SK. Le nombre aléatoire RD2 avait été généré et mémorisé par le module de sécurité MS à l'étape E7 et transmis avec les données personnelles chiffrées DPC et le premier code d'authentification MAC1 au terminal mobile.

Le terminal mobile TM via la carte d'usager transmet un message incluant l'identificateur de terminal IMEI et le code d'authentification MAC2, destiné au serveur d'opérateur SOP, à l'étape E14.

A l'étape E15, en réponse à ce dernier message, le module de sécurité MS dans le serveur d'opérateur SOP applique les données personnalisées initialement mémorisées à l'étape E04 en correspondance avec l'identificateur reçu IMEI et le deuxième nombre aléatoire RD2, à l'algorithme d'authentification AA avec la clé secrète SK et produit un code d'authentification calculé MAC2c. Le module de sécurité compare le code d'authentification calculé MAC2c au code d'authentification transmis MAC2, à l'étape E16. Si les codes d'authentification comparés sont identiques, l'actualisation des données personnalisées dans le terminal mobile TM est confirmée et le procédé est arrêté à l'étape E17.

Par contre, si les codes d'authentification comparés à l'étape E16 sont différents, une étape d'erreur ER est exécutée de manière à éventuellement signaler à l'usager que le terminal mobile TM est déverrouillé mais présente un dysfonctionnement.

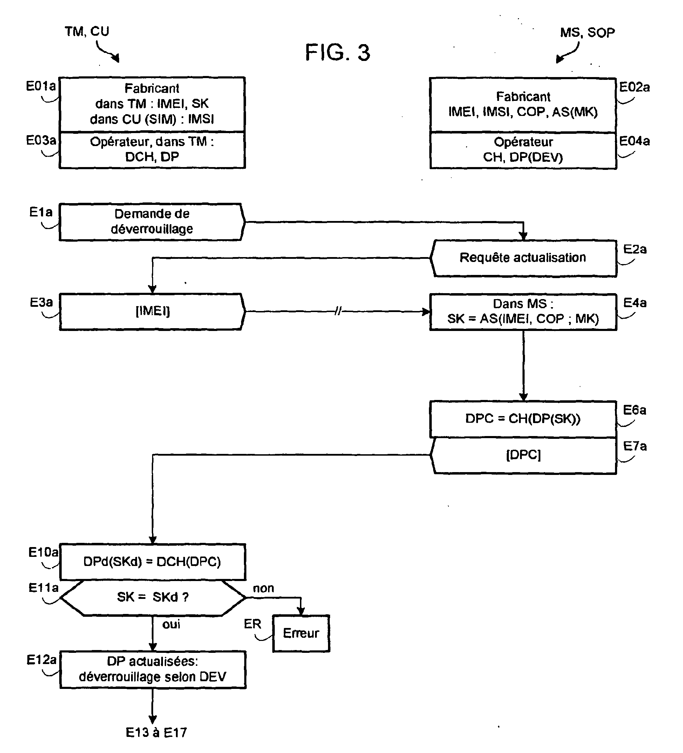

Selon une **deuxième réalisation montrée à la** **figure 3****,** plus simple que la première réalisation et pouvant être développée avant la première réalisation, le terminal mobile TM ne comprend pas d'algorithme d'authentification AA. Les étapes pour la deuxième réalisation sont désignées avec des repères de référence terminés par la lettre a.

Les étapes E01a à E04a ne sont modifiées que par l'absence d'installation de l'algorithme d'authentification AA dans le terminal mobile TM et le module de sécurité MS, aux étapes d'opérateur initiales E03a et E04a.

La deuxième réalisation diffère de la première réalisation essentiellement par les étapes modifiées suivantes, après l'expiration de la durée de verrouillage, lorsque l'usager US souhaite déverrouiller son terminal mobile TM de manière à l'utiliser éventuellement à travers le réseau de radiocommunications d'un autre opérateur. Pour déverrouiller le terminal mobile, au moins les étapes modifiées E1a à E12a montrées à la figure 3 sont exécutées, sans les étapes E5, E8 et E9 selon la première réalisation.

Après les étapes E1a et E2a, ou en variante après seulement l'étape E2a, le terminal mobile TM transmet en réponse à la requête d'actualisation un message incluant l'identité de terminal IMEI, sans un nombre aléatoire RD1, au module de sécurité MS dans le serveur SOP, à l'étape E3a.

A la suite de la réception de l'identité IMEI, le module de sécurité MS applique l'identité de terminal mobile reçue IMEI et le code d'opérateur COP à l'algorithme de sécurité AS avec la clé mère MK pour produire la clé secrète fille SK propre au terminal mobile TM, à l'étape E4a. La clé secrète SK fait office de code de déverrouillage.

A l'étape suivante E6a, les données personnelles DP complétée par la clé secrète SK, ou en variante plus simple, seulement la clé secrète SK, sont chiffrées par l'algorithme de chiffrement CH en des données personnelles chiffrées DPC. Le serveur SOP établit un message incluant les données personnelles chiffrées DPC à l'étape E7a. Ce message très réduit par rapport à la première réalisation est transmis au terminal mobile TM à travers les réseaux RP, RA et RR.

En réponse à ce message, le terminal mobile TM déchiffre les données personnelles chiffrées DPC transmises par le serveur SOP en les appliquant à l'algorithme de déchiffrement DCH et produit des données personnelles déchiffrées DPd incluant une clé secrète déchiffrée SKd, à l'étape E10a. Le terminal mobile TM compare la clé secrète initialement mémorisée à l'étape E01a à la clé secrète déchiffrée SKd et éventuellement compare les autres données personnelles initialement mémorisées à l'étape E03a aux autres données personnelles déchiffrée DPd à l'étape E11a. Si les clés secrètes comparées sont identiques et éventuellement les données personnelles comparées diffèrent typiquement par la présence du paramètre de déverrouillage DEV dans les données personnelles déchiffrée DPd, le terminal mobile TM applique le paramètre de déverrouillage DEV à l'application de déverrouillage qui actualise les données personnelles à l'étape E12a. Le terminal mobile TM peut être ensuite utilisé pour communiquer avec tout opérateur autre que le premier opérateur si l'usager le souhaite.

Selon la variante plus simple déjà évoquée, le terminal mobile TM ne compare que la clé secrète initialement mémorisée à la clé secrète déchiffrée SKd à l'étape E11a, et active l'application de déverrouillage lorsque les clés secrètes comparées sont identiques à l'étape E12a.

Dans les autres cas, le terminal TM reste verrouillé, les éventuelles données personnelles DP ne sont pas actualisées, et le terminal mobile TM produit un message d'erreur, comme indiqué à une étape ER.

Dans une deuxième réalisation plus complète, le procédé de déverrouillage comprend des étapes E13 à E17, comme montré à la figure 2, afin d'acquitter l'actualisation des données personnelles DP après l'étape E12a et en particulier le déverrouillage du terminal auprès du serveur d'opérateur SOP. Un nombre aléatoire RD2 est alors généré et mémorisé par le module de sécurité MS à l'étape E7a et transmis avec les données personnelles chiffrées DPC au terminal mobile.

## Revendications

1. Procédé pour déverrouiller un terminal mobile (TM) qui avant son utilisation est affecté à un réseau de radiocommunications (RR) géré par un opérateur et a mémorisé une clé secrète (SK) résultant de l'application d'une identité (IMEI) du terminal mobile et d'un code (COP) de l'opérateur à un algorithme de sécurité (AS), le procédé comprenant après une durée prédéterminée d'utilisation une introduction d'une clé secrète dans le terminal mobile pour y être comparée à la clé secrète mémorisée, **caractérisé en ce qu'**il comprend les étapes suivantes:
avant l'utilisation, mémoriser l'identité (IMEI) du terminal mobile et implémenter (E02a) l'algorithme de sécurité (AS) inconnu de l'opérateur dans un module de sécurité (MS), et introduire (E04a) le module de sécurité dans une entité de service (SOP) gérée par l'opérateur et communiquant avec le terminal mobile à travers au moins le réseau de radiocommunications (RR),
après la durée prédéterminée d'utilisation, dans le module de sécurité déterminer (E4a) une clé secrète (SK) résultant de l'application de l'identité de terminal (IMEI) transmise (E3a) par le terminal mobile et du code (COP) de l'opérateur à l'algorithme de sécurité (AS) à la suite d'une requête d'actualisation transmise (E2a) par l'entité de service (SOP), et transmettre (E7a) la clé secrète déterminée chiffrée au terminal mobile (TM) à travers le réseau de radiocommunications (RR), et déchiffrer (E10a) dans le terminal mobile la clé secrète chiffrée en tant que clé secrète introduite pour la comparer (E11a) à la clé secrète mémorisée pour déverrouiller (E12a) le terminal mobile lorsque les clés secrètes comparées sont identiques.

2. Procédé conforme à la revendication 1, selon lequel des données personnelles (DP) incluant la clé secrète déterminée et un paramètre sont transmises chiffrées (E7a) depuis l'entité de service (SOP) au terminal mobile (TM) et sont déchiffrées (E10a) dans le terminal mobile pour activer un déverrouillage du terminal mobile dépendant du paramètre lorsque les clés secrètes comparées sont identiques.

3. Procédé conforme à la revendication 1, comprenant les étapes suivantes :
dans le module de sécurité, appliquer (E5) des données personnelles (DP) et un premier nombre aléatoire (RD1) transmis (E3) avec l'identité de terminal (IMEI) par le terminal mobile, à un algorithme (AA) ayant pour clé la clé secrète déterminée (SK) pour produire un premier code d'authentification (MAC1) afin de transmettre (E7) les données personnelles chiffrées (DPC) et le code d'authentification (MAC1) depuis l'entité de service au terminal mobile, et
dans le terminal mobile, produire (E8) un premier code d'authentification (MAC1c), comparer (E9) les premiers codes d'authentification produit et transmis (MAClc, MACI) à la place de la comparaison des clés secrètes, et déchiffrer (E10) et interpréter les données personnelles chiffrées lorsque les codes d'authentification comparés sont identiques.

4. Procédé conforme à la revendication 3, selon lequel les données personnelles (DP) incluent au moins une partie de l'identité (IMEI) du terminal mobile et un paramètre afin d'activer un déverrouillage du terminal mobile dépendant du paramètre lorsque les codes d'authentification comparés sont identiques.

5. Procédé conforme à l'une quelconque des revendications 1 à 4, comprenant, en outre, après la durée prédéterminée d'utilisation, une transmission d'un message de demande de déverrouillage (E1) depuis le terminal mobile (TM) vers le module de sécurité (MS) afin que le module de sécurité requiert (E2) la transmission (E3) de l'identité (IMEI) au terminal.

6. Procédé conforme à l'une quelconque des revendications 1 à 4, **caractérisé en ce qu'**il comprend les étapes suivantes:
générer un deuxième nombre aléatoire (RD2) dans le module de sécurité (MS) et le transmettre avec au moins la clé secrète ou un premier code d'authentification (MAC1) dépendant de la clé secrète au terminal mobile (TM),
lorsque les clés secrètes ou des premiers codes d'authentification comparés sont identiques dans le terminal mobile, produire (E13) un deuxième code d'authentification (MAC2) résultant de l'application des données personnelles (DP) et du deuxième nombre aléatoire (RD2) à un algorithme (AA) ayant pour clé la clé secrète (SK), et transmettre (E14) l'identité de terminal (IMEI) et le deuxième code d'authentification (MAC2) depuis le terminal mobile à l'entité de service, et
dans le module de sécurité (MS), produire (E15) un deuxième code d'authentification (MAC2c) et le comparer (E18) au deuxième code d'authentification transmis (MAC2).

7. Procédé conforme à l'une quelconque des revendications 1 à 6, selon lequel l'entité de service (SOP) est un serveur géré par l'opérateur et le module de sécurité (MS) est une carte à puce introduite de manière amovible dans le serveur.

## Claims

1. A method for unlocking a mobile terminal (TM) which, prior to being used, is assigned to a radiocommunications network (RR) managed by an operator and has stored a secret key (SK) resulting from the application of an identity (IMEI) of the mobile terminal and of an operator's code (COP) to a safety algorithm (AS), with the method including, after a predetermined utilization time, the introduction of a secret key into the mobile terminal so that it can be compared therein with the stored secret key, **characterized in that** it includes the following steps:
- prior to the utilization, storing the identity (IMEI) of the mobile terminal and implementing (E02a) the safety algorithm (AS) which is unknown to the operator in a safety module (MS), and introducing (E04a) the safety module into a service entity (SOP) managed by the operator and communicating with the mobile terminal through at least the radiocommunications network (RR),
- after the predetermined utilization time, in the safety module, determining (E4a) a secret key (SK) resulting from the application of the terminal identity (IMEI) transmitted (E3a) by the mobile terminal and of the operator's code (COP) to the safety algorithm (AS) further to a request for an update transmitted (E2a) by the service entity (SOP), and transmitting (E7a) the enciphered determined secret key to the mobile terminal (TM) through the radiocommunications network (RR), and deciphering (E10a) in the mobile terminal the enciphered secret key as the secret key introduced to be compared (E11a) with the stored secret key for unlocking (E12a) the mobile terminal when the compared secret keys are identical.

2. A method according to claim 1, wherein personal data (DP) including the determined secret key and one parameter are transmitted enciphered (E7a) from the service entity (SOP) to the mobile terminal (TM) and are deciphered (E10a) in the mobile terminal in order to activate the unlocking of the mobile terminal depending on the parameter when the compared secret keys are identical.

3. A method according to claim 1, including the following steps:
in the safety module, applying (E5) personal data (E5) and a first random number (RD1) transmitted (E3) with the terminal identity (IMEI) by the mobile terminal, to an algorithm (AA) whose key is the secret key (SK) determined for producing a first authentication code (MAC1) so as to transmit (E7) the enciphered personal data (DPC) and the authentication code (MAC1) from the service entity to the mobile terminal, and
in the mobile terminal, producing (E8) a first authentication code (MAC1c), comparing (E9) the first produced and transmitted authentication codes (MAC1c, MAC1) instead of comparing the secret keys, and deciphering (E10) and interpreting the enciphered personal data when the compared authentication codes are identical.

4. A method according to claim 3, wherein the personal data (DP) includes at least one portion of the identity (IMEI) of the mobile terminal and one parameter so as to activate the unlocking of the mobile terminal depending on the parameter when the compared authentication codes are identical.

5. A method according to any one of claims 1 to 4, further including, after the predetermined utilization time, the transmission of a message requesting the unlocking (E1) from the mobile terminal (TM) to the safety module (MS) so that the safety module requests (E2) the transmission (E3) of the identity (IMEI) from the terminal.

6. A method according to any one of claims 1 to 4, **characterized in that** it includes the following steps:
- generating a second random number (RD2) in the safety module (MS) and transmitting it with at least the secret key or a first authentication code (MAC1) depending on the secret key to the mobile terminal (TM),
- when the compared secret keys or first authentication codes are identical in the mobile terminal, producing (E13) a second authentication code (MAC2c) resulting from the application of the personal data (DP) and the second random number (RD2) to an algorithm (AA) whose key is the secret key (SK), and transmitting (E14) the terminal identity (IMEI) and the second authentication code (MAC2c) from the mobile terminal to the service entity, and
- in the safety module (MS), producing (E15) a second authentication code (MAC2c) and comparing it (E18) with the second transmitted authentication code (MAC2).

7. A method according to any one of claims 1 to 6, wherein the service entity (SOP) is a server managed by the operator and the safety module (MS) is a chip card removably introduced into the server.

## Patentansprüche

1. Verfahren für die Freigabe eines mobilen Terminals (TM), das vor seiner Benutzung einem Funknetz (RR) zugeordnet wird, das von einem Betreiber verwaltet wird, und das einen Geheimschlüssel (SK) gespeichert hat, der aus der Anwendung einer Identität (IMEI) des mobilen Terminals und eines Codes (COP) des Betreibers auf einen Sicherheitsalgorithmus (AS) resultiert, wobei das Verfahren nach einer vorbestimmten Benutzungsdauer eine Eingabe eines Geheimschlüssels in das mobile Terminal umfasst, um dort mit dem gespeicherten Geheimschlüssel verglichen zu werden,
**dadurch gekennzeichnet, dass** es die folgenden Schritte umfasst:
vor der Benutzung die Identität (IMEI) des mobilen Terminals speichern und den Sicherheitsalgorithmus (AS), der dem Betreiber unbekannt ist, in einem Sicherheitsmodul (MS) implementieren (E02a) und das Sicherheitsmodul in eine Serviceeinheit (SOP) eingeben, die vom Betreiber verwaltet wird, und die mit dem mobilen Terminal durch zumindest das Funknetz (RR) kommuniziert,
nach der vorbestimmten Benutzungsdauer im Sicherheitsmodul einen Geheimschlüssel (SK) bestimmen, der aus der Anwendung der vom mobilen Terminal übermittelten (E3a) Identität des Terminals (IMEI) und des Codes (COP) des Betreibers auf den Sicherheitsalgorithmus (AS) resultiert, dies nach einer von der Serviceeinheit (SOP) übermittelten (E2a) Anforderung zur Aktualisierung, und den bestimmten und im mobilen Terminal TM verschlüsselten Geheimschlüssel durch das Funknetz (RR) übermitteln (E7a) und im mobilen Terminal den Geheimschlüssel entschlüsseln (E10a), der als Geheimschlüssel verschlüsselt und eingegeben wurde, um ihn mit dem gespeicherten Geheimschlüssel zu vergleichen (E11a), um das mobile Terminal freizugeben (E12a), wenn die verglichenen Geheimschlüssel identisch sind.

2. Verfahren nach Anspruch 1, **dadurch gekennzeichnet, dass** persönliche Daten (DP), die den bestimmten Geheimschlüssel und einen Parameter einschließen, von der Serviceeinheit (SOP) verschlüsselt (E7a) an das mobile Terminal TM übermittelt werden und im mobilen Terminal entschlüsselt (E10a) werden, um eine vom Parameter abhängige Freigabe des mobilen Terminals zu aktivieren, wenn die verglichenen Geheimschlüssel identisch sind.

3. Verfahren nach Anspruch 1, **dadurch gekennzeichnet, dass** es die folgenden Schritte umfasst:
Im Sicherheitsmodul persönliche Daten (DP) und eine erste beliebige Zahl (RD1), die vom mobilen Terminal mit der Identität des Terminals (IMEI) übermittelt (E3) wird, auf einen Algorithmus (AA) anwenden (E5), der als Schlüssel den bestimmten Geheimschlüssel (SK) hat, um einen ersten Authentifizierungscode (MAC1) zu erzeugen, um die verschlüsselten persönlichen Daten (DPC) und den Authentifizierungscode (MAC1) von der Serviceeinheit an das mobile Terminal zu übermitteln (E7),
Im mobilen Terminal einen ersten Authentifizierungscode (MAC1c) erzeugen (E8), die ersten erzeugten und übermittelten Authentifizierungscodes (MAC1c, MAC1) anstelle des Vergleichs der Geheimschlüssel vergleichen (E9) und die verschlüsselten persönlichen Daten entschlüsseln (E10) und auslegen, wenn die verglichenen Authentifizierungscodes identisch sind.

4. Verfahren nach Anspruch 3, **dadurch gekennzeichnet, dass** die persönlichen Daten (DP) zumindest einen Teil der Identität (IMEI) des mobilen Terminals und einen Parameter einschließen, um eine vom Parameter abhängige Freigabe des mobilen Terminals zu aktivieren, wenn die verglichenen Authentifizierungsschlüssel identisch sind.

5. Verfahren nach einem beliebigen der vorstehenden Ansprüche 1 bis 4, **dadurch gekennzeichnet, dass** es ferner nach der vorbestimmten Benutzungsdauer eine Übermittlung einer Meldung mit Freigabeanforderung (E1) vom mobilen Terminal (TM) zum Sicherheitsmodul (MS) umfasst, damit das Sicherheitsmodul die Übermittlung (E3) der Identität (IMEI) an das Terminal anfordert (E2).

6. Verfahren nach einem beliebigen der vorstehenden Ansprüche 1 bis 4, **dadurch gekennzeichnet, dass** es die folgenden Schritte umfasst:
Im Sicherheitsmodul (MS) eine zweite beliebige Zahl (RD2) erzeugen und sie mit zumindest dem Geheimschlüssel oder einem ersten Authentifizierungscode (MAC1), der vom Geheimschlüssel abhängt, an das mobile Terminal (TM) übermitteln;
Wenn die Geheimschlüssel oder erste verglichene Authentifizierungscodes im mobilen Terminal identisch sind, einen zweiten Authentifizierungscode (MAC2) erzeugen (E13), der aus der Anwendung der persönlichen Daten (DOP) auf einen Algorithmus (AA) resultiert, der als Schlüssel den Geheimschlüssel (SK) hat, und die Identität des Terminals (IMEI) und den zweiten Authentifizierungscode (MAC2) vom mobilen Terminal an die Serviceeinheit übermitteln (E14);
Im Sicherheitsmodul (MS) einen zweiten Authentifizierungscode (MAC2c) erzeugen (E15) und ihn mit dem übermittelten zweiten Authentifizierungscode (MAC2) vergleichen (E18).

7. Verfahren nach einem beliebigen der vorstehenden Ansprüche 1 bis 6, **dadurch gekennzeichnet, dass** die Serviceeinheit (SOP) ein vom Betreiber verwalteter Server ist und das Sicherheitsmodul (MS) eine Chipkarte ist, die entfernbar in den Server eingeführt wird.
